# EUROPÄISCHE PATENTSCHRIFT

(11) **EP 2 737 195 B1**
(45) Veröffentlichungstag und Bekanntmachung des Hinweises auf die Patenterteilung: **16.09.2015**
(21) Anmeldenummer: 12745438.7
(22) Anmeldetag: 26.07.2012
(51) Int. Cl.: F02M 25/07

(54) **AUFGELADENE BRENNKRAFTMASCHINE**
SUPERCHARGED INTERNAL COMBUSTION ENGINE
MOTEUR À COMBUSTION INTERNE SURALIMENTÉ

(30) Priorität: 29.07.2011 DE 102011080101; 15.08.2011 DE 102011080965
(43) Veröffentlichungstag der Anmeldung: 04.06.2014
(73) Patentinhaber: Mahle International GmbH, 70376 Stuttgart (DE); Behr Thermot-tronik GmbH, 70806 Kornwestheim (DE)
(72) Erfinder: BAUER, Swen -Juri, 70374 Stuttgart (DE); GRÜNER, Andreas, 73110 Hattenhofen (DE); JANßEN, Martin, 70195 Stuttgart (DE); KLEIN, Hans-Peter, 71397 Leutenbach (DE); NOACK, Mandy, 88499 Riedlingen (DE); RÜCKAUF, Jörg, 71701 Schwieberdingen (DE); VAN EICKELS, Bernd, 73733 Esslingen (DE); WILLERS, Eike, 70469 Stuttgart (DE)
(74) Vertreter: BRP Renaud & Partner mbB Rechtsanwälte Patentanwälte Steuerberater
(86) Internationale Anmeldenummer: PCT/EP2012/064703
(87) Internationale Veröffentlichungsnummer: WO 2013/017524

(56) Entgegenhaltungen:
- EP-A1- 0 075 360
- WO-A1-2008/024609
- DE-A1- 10 222 917
- DE-A1-102011 016 630
- US-A1- 2011 132 337

## Beschreibung

Die vorliegende Erfindung betrifft eine aufgeladene Brennkraftmaschine mit einem Abgasturbolader, der turbinenseitig in einen Abgasstrang und verdichterseitig in einen Ansaugstrang der Brennkraftmaschine eingebunden ist, gemäß dem Oberbegriff des Anspruchs 1.

Aus der DE 10 2008 005 400 A1 ist eine gattungsgemäße Brennkraftmaschine mit einem Abgasturbolader bekannt, wobei eine den Abgasstrang und den Ansaugstrang verbindende Abgasrückführleitung vorgesehen ist. Die Abgasrückführleitung zweigt dabei stromauf einer Turbine des Abgasturboladers aus dem Abgasstrang der Brennkraftmaschine ab und mündet stromab des Verdichters des Abgasturboladers in einen Ansaugstrang der Brennkraftmaschine wieder ein, sodass in diesem Fall von einer Hochdruck-Abgasrückführung gesprochen wird. Im Bereich der Abgasrückführleitung ist dabei ein Abgasrückführventil angeordnet.

Aus der US 2011/132337 A1 ist eine aufgeladene Brennkraftmaschine mit einem Abgasturbolader bekannt, der turbinenseitig in einen Abgasstrang und verdichterseitig in einen Ansaugstrang eingebunden ist. Darüber hinaus ist eine den Abgasstrang und den Ansaugstrang verbindende Abgasrückführleitung vorgesehen. Die Abgasrückführleitung zweigt dabei stromab der Turbine des Abgasturboladers aus dem Abgasstrang ab und mündet stromauf des Verdichters in den Ansaugstrang ein. Im Bereich der Abgasrückführleitung ist eine Ventileinrichtung vorgesehen, mittels welcher die Abgasrückführrate durch die Abgasrückführleitung steuerbar/regelbar ist.

Aus der DE 10 2011 016 630 A1 ist ebenfalls eine aufgeladene Brennkraftmaschine bekannt.

Generell soll in modernen Kraftfahrzeugen eine erhöhte Abgasrückführung erfolgen, um dadurch die NOx-Grenzwerte, die bspw. der Euro-6-Norm zugrunde liegen, herabsetzen zu können. Zugleich kann bei Otto-Motoren eine Reduzierung des Kraftstoffverbrauchs im Teillastbereich erzielt werden. Die Senkung der NOx-Emissionswerte durch eine reine Abgasnachbehandlung, bspw. durch einen SCR-Katalysator, hat sich dabei als nicht ausreichend herausgestellt. Nachteilig bei bekannten Hochdruck-Abgasrückführsystemen ist jedoch der dem Abgasturbolader zur Verfügung stehende reduzierte Abgasmassenstrom, der eine reduzierte Verdichterleistung zur Folge hat, sowie eine aufwändige und damit teure Kühlung der rückgeführten Abgase, da diese üblicherweise nahezu direkt der Brennkraftmaschine entnommen werden. Die vorliegende Erfindung beschäftigt sich daher mit dem Problem, die aus dem Stand der Technik bekannten Nachteile zu überwinden.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, nicht mehr wie bisher üblich, die zur Rückführung vorgesehenen Abgase direkt an einem Auslass der Brennkraftmaschine abzuzweigen, sondern stromab eines Abgasturboladers und damit ausschließlich in einem Niederdruckbereich. Die erfindungsgemäße aufgeladene Brennkraftmaschine besitzt hierzu einen Abgasturbolader, der turbinenseitig in einen Abgasstrang und verdichterseitig in einen Ansaugstrang der Brennkraftmaschine eingebunden ist. Darüber hinaus ist eine den Abgasstrang und den Ansaugstrang verbindende Abgasrückführleitung vorgesehen, die stromab der Turbine des Abgasturboladers aus dem Abgasstrang abzweigt und stromauf des Verdichters in den Ansaugstrang wieder einmündet. Zur Steuerung bzw. Regelung der Abgasrückführrate ist dabei im Bereich der Abgasrückführleitung, bspw. in einem Abzweigbereich aus dem Abgasstrang, eine Ventileinrichtung vorgesehen. Durch die erfindungsgemäße im Bereich der Abgasrückführleitung angeordnete Ventileinrichtung kann auf eine bisher im Abgasstrang angeordnete Drosselklappe zur Steuerung/Regelung der Abgasrückführrate verzichtet werden. Dies ist günstig, da die bisher im Abgasstrang angeordnete Drosselklappe im Vergleich zu der erfindungsgemäßen Ventileinrichtung eine nur ungenaue Steuerung/Regelung der Abgasrückführrate erlaubte. Ein weiterer wesentlicher Nachteil der bisher im Abgasstrang angeordneten Drosselklappe ist deren Anfälligkeit für Verschmutzungen, die bei längerem Betrieb zu ungenauen Drosselfunktionen führen. Das Verschmutzen der Drosselklappe kann bspw. durch die im Dieselpartikelfilter nicht entfernten Schwebstoffe erfolgen. Bei der erfindungsgemäßen Ventileinrichtung ist dabei jedoch nicht nur der Abgasrückführmassenstrom, sondern zugleich auch ein Abgasgegendruck steuerbar bzw. regelbar. Die Ventileinrichtung weist hierbei einen verstellbaren Ventilkolben auf, der zur Steuerung/Regelung der Abgasrückführrate in Axialrichtung zwischen zumindest drei Stellungen verstellbar ist, nämlich einer ersten Stellung, in der er einen zweiten Abgaskanal verschließt, wogegen der erste Abgaskanal und der Abgasrückführkanal vollständig geöffnet sind, einer zweiten Stellung, in der er den ersten und zweiten Abgaskanal und den Abgasrückführkanal vollständig öffnet sowie einer dritten Stellung, in der er den Abgasrückführkanal schließt, wogegen der erste und zweite Abgaskanal vollständig geöffnet sind. In der dritten Stellung wird somit kein Abgas rückgeführt, sondern sämtliches Abgas über den Abgaskanal abgeleitet. In der ersten Stellung hingegen ist eine vergleichsweise hohe Abgasrückführrate erzielbar, da sich der gesamte Abgasstrom ausschließlich auf den ersten Abgaskanal und den Abgasrückführkanal aufteilt. In der zweiten Stellung des Ventilkolbens ist dagegen lediglich eine reduzierte Abgasrückführung darstellbar, da sich hier der Abgasstrom auf beide Abgaskanäle und den Abgasrückführkanal aufteilt. Selbstverständlich sind dabei auch beliebige Zwischenstellungen zum exakten und insbesondere feinen Justieren der Abgasrückführrate denkbar. Zusätzlich Einfluss genommen werden kann auf die Abgasrückführrate durch eine entsprechende Querschnittsdimensionierung des ersten und zweiten Abgaskanals sowie des Abgasrückführkanals.

Bei einer vorteilhaften Weiterbildung der erfindungsgemäßen Lösung weist die Ventileinrichtung einen verstellbaren Ventilkolben auf, der zur Steuerung/Regelung der Abgasrückführrate in Axialrichtung verstellbar ist. Dieser Ventilkolben kann bspw. aus Keramik ausgebildet sein. Durch die Ausbildung des Ventilkolbens aus Keramik kann eine extrem glatte Oberfläche erzielt werden, die die Anlagerungen von Schmutz, insbesondere von Rußpartikeln, deutlich erschwert. Ein derartiger Kolben kann zudem einen Selbstreinigungseffekt aufweisen, da er beim Axialverstellen in die unterschiedlichen Stellungen an einem entsprechenden Ventilsitz abgestreift wird. Zudem weist eine derart ausgebildete Ventileinrichtung einen vergleichsweise geringen Bauraum auf sowie einen geringen Druckverlust bei geöffneter Ventileinrichtung, da in diesem Zustand der Kolben vorzugsweise gänzlich aus dem Strömungsquerschnitt herausgezogen ist. Mit einem derartigen Kolben lässt sich zudem eine hochgenaue Durchflusssteuerung erzielen, die in dieser Genauigkeit mit bisher bekannten Drosselklappen oder Tellerventilen nicht darstellbar ist. Mit der erfindungsgemäßen Ventileinrichtung ist darüber hinaus eine Temperatur- und Massenstromsteuerung möglich. Durch das Entnehmen des rückgeführten Abgases stromab des Abgasturboladers ist dieses auch deutlich kälter, wodurch bei einer erneuten Zuführung zur Verbrennung in der Brennkraftmaschine ein deutlich reduzierter Kühlaufwand betrieben werden muss. Ein Verstellen des Kolbens oder allgemein des Ventilelements kann dabei bspw. mittels eines Elektromotors erfolgen, wobei selbstverständlich zusätzlich denkbar ist, dass die erfindungsgemäße Ventileinrichtung gekühlt ist. Insbesondere aufgrund der zuletzt genannten Tatsache, bspw. aber auch allein aufgrund des Umstandes, dass die erfindungsgemäße Ventileinrichtung in einem nicht temperaturkritischen Bereich des Abgasstrangs angeordnet ist, können hier auch Kunststoffteile, bspw. für ein Gehäuse der Ventileinrichtung zum Einsatz gelangen, die bei einer direkten Anordnung der Ventileinrichtung, bspw. im Bereich eines Abgaskrümmers, aufgrund der dort herrschenden hohen Abgastemperaturen nicht einsetzbar wären.

Anstelle des axial verstellbaren Ventilkolbens kann in einer nicht erfindungsgemäßen Ausführungsform auch ein verdrehbares Ventilelement, bspw. in der Art eines Zylinders oder einer Klappe, vorgesehen sein, wobei auch dieses drehbare Ventilelement bspw. aus Keramik ausgebildet werden kann, sodass auch in diesem Fall unerwünschte Anlagerungen vermieden oder zumindest reduziert und zugleich ein Selbstreinigungseffekt durch ein Abstreifen beim Verdrehen des drehbaren Ventilelements erzielt werden kann. Selbstverständlich ist auch ein schwenkbare Klappe zum Steuern/Regeln der Abgasrückführrate denkbar, wobei auch diese aus Keramik ausgebildet bzw. beschichtet sein kann, sodass auch hier eine vergleichsweise glatte Oberfläche erreichbar ist, auf der Ablagerungen nicht oder nur schwer anhaften.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine erfindungsgemäße Brennkraftmaschine mit einem Abgasturbolader und einer Ventileinrichtung zur Regelung/Steuerung einer Abgasrückführrate im Bereich der Abzweigung einer Abgasrückführleitung aus dem Abgasstrang,
- Fig. 2: eine mögliche erste Ausführungsform der Ventileinrichtung mit einem axial verstellbaren Kolben,
- Fig. 3: eine Schnittdarstellung durch die Ventileinrichtung,
- Fig. 4a-c: unterschiedliche Schaltzustände der gemäß den Figuren 2 und 3 gezeigten Ventileinrichtung,
- Fig. 5: eine weitere alternative Ausführungsform der erfindungsgemäßen Ventileinrichtung mit einem drehbaren Ventilelement,
- Fig. 6: eine Schnittdarstellung durch die Ventileinrichtung,
- Fig. 7a-c: die gemäß den Figuren 5 und 6 dargestellte Ventileinrichtungen bei unterschiedlichen Schaltzuständen,
- Fig. 7d: ein verdrehbares Ventilelement mit unterschiedlichen Radien im Bereich des zweiten Abgaskanals und des Abgasrückführkanals,
- Fig. 8: eine weitere alternative Ausführungsform der erfindungsgemäßen Ventileinrichtung mit einer schwenkbaren Klappe,
- Fig. 9: eine Schnittdarstellung durch die Ventileinrichtung gemäß der Fig. 8,
- Fig. 10a-c: unterschiedliche Schaltzustände der gemäß den Figuren 8 und 9 gezeigten Ventileinrichtung,
- Fig. 11 a-c: unterschiedliche Schaltzustände einer Ventileinrichtung mit einem axial verstellbaren Kolben, der unterschiedliche Radien aufweist,
- Fig. 12: eine erfindungsgemäße Brennkraftmaschine mit einer Ventileinrichtung zur Regelung/Steuerung einer Abgasrückführrate im Bereich der Einmündung der Abgasrückführleitung in den Ansaugstrang,
- Fig. 13 a-c: unterschiedliche Schaltzustände einer Ventileinrichtung im Bereich der Einmündung der Abgasrückführleitung in den Ansaugstrang.

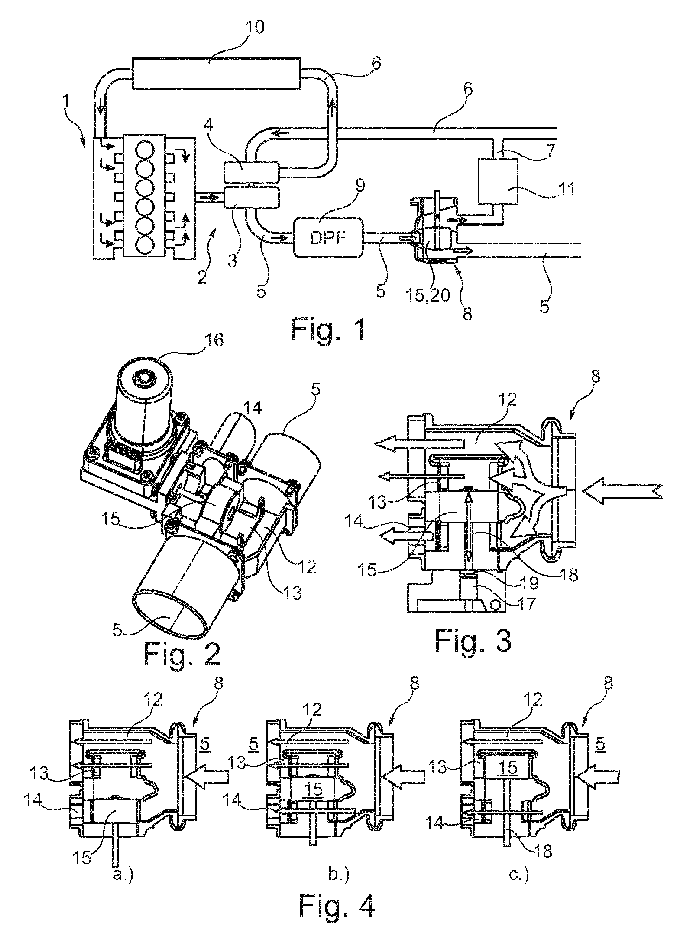

Entsprechend der Fig. 1, weist eine erfindungsgemäße aufgeladene Brennkraftmaschine 1 einen Abgasturbolader 2 mit einer Turbine 3 und einem Verdichter 4 auf. Der Abgasturbolader 2 ist dabei turbinenseitig in einen Abgasstrang 5 und verdichterseitig in eine Ansaugstrang 6 der Brennkraftmaschine 1 eingebunden, wobei zusätzlich eine den Abgasstrang 5 und den Ansaugstrang 6 verbindende Abgasrückführleitung 7 vorgesehen ist. Erfindungsgemäß zweigt nun die Abgasrückführleitung 7 stromab der Turbine 3 des Abgasturboladers 2 aus dem Abgasstrang 5 ab und mündet stromauf des Verdichters 4 in den Ansaugstrang 6 ein. Zusätzlich ist im Bereich der Abgasrückführleitung 7 eine Ventileinrichtung 8 zur Steuerung/Regelung einer Abgasrückführrate angeordnet.

Durch die Anordnung der Abgasrückführleitung 7 stromab der Turbine 3 des Abgasturboladers 2 ist diese im Niederdruckbereich angeordnet, in welchem die Abgase üblicherweise eine deutlich geringere Temperatur aufweisen, sodass diese vor einer erneuten Zuführung in die Brennkraftmaschine 1 nicht oder nicht so stark gekühlt werden müssen, wie dies bei einer Hochdruck-Abgasrückführung, d. h. bei einer Abgasrückführung stromauf der Turbine 3 der Fall wäre. Generell erfüllt dabei die Abgasrückführung den Zweck, die von der Brennkraftmaschine 1 insgesamt ausgestoßenen NOx-Emissionen zu reduzieren, was ohne die Abgasrückführung, d. h. ausschließlich mit entsprechenden SCR-und NOx-Speicherkatalysatoren nicht ausreichend darstellbar wäre. Durch die Entnahme der rückzuführenden Abgase aus dem Niederdruckbereich, d. h. stromab der Turbine 3 des Abgasturboladers 2, steht der Turbine 3 noch der gesamte von der Brennkraftmaschine 1 kommende Abgasmassenstrom zur Verfügung, sodass diese eine vergleichsweise hohe Verdichterleistung erzeugen kann, was bei einer Abgasentnahme stromauf der Turbine 3 nicht der Fall wäre. Mit der erfindungsgemäßen Ventileinrichtung 8 lässt sich nicht nur die Abgasrückführrate, d. h. der Abgasrückführ-Massenstrom, sondern zugleich auch ein Abgasgegendruck regeln bzw. steuern, was bisher von im Abgasstrang 5 angeordneten Drosselklappen bewerkstelligt werden musste. Derartige Drosselklappen erlauben jedoch eine im Vergleich zur erfindungsgemäßen Ventileinrichtung 8 nur deutlich ungenauere Regelung/Steuerung und sprechen zudem nicht so schnell an, wie die erfindungsgemäße Ventileinrichtung 8, da sich bei einem Schließen der im Abgasstrang 5 angeordneten Drosselklappe zunächst ein entsprechender Abgasdruck aufbauen muss. Von besonderem Vorteil jedoch ist, dass die im Niederdruckbereich rückgeführten Abgase eine deutlich geringere Abgastemperatur aufweisen und dadurch vor einer erneuten Zuführung zur Verbrennung in der Brennkraftmaschine 1 deutlich weniger Kühlenergie bedürfen.

Zwischen der Turbine 3 des Abgasturboladers 2 und der Ventileinrichtung 8 kann darüber hinaus ein Filter 9, bspw. ein Dieselpartikelfilter, angeordnet sein, der eine auf die Ventileinrichtung 8 wirkende Verschmutzung reduziert. Zwischen dem Verdichter 4 und der Brennkraftmaschine 1 kann zudem ein Ladeluftkühler 10 angeordnet sein, der die zur Verbrennung in der Brennkraftmaschine 1 bereitgestellte Ladeluft kühlt und dadurch je Verbrennungsvorgang mehr Luft zuführen kann. Eine entsprechende Einrichtung in der Form eines Abgaskühlers 11 kann auch zwischen der Ventileinrichtung 8 und dem Ansaugstrang 6 angeordnet sein, insbesondere im Bereich der Abgasrückführleitung 7.

Generell kann die Ventileinrichtung 8 im Bereich der Abzweigung der Abgasrückführleitung 7 aus dem Abgasstrang 5 angeordnet sein (vgl. Fig. 1) oder aber im Bereich der Einmündung der Abgasrückführleitung 7 in den Ansaugstrang 6 (vgl. Fig., 12). Alternativ ist auch vorstellbar, dass die Ventileinrichtung 8 im Bereich des Filters 9 oder im Bereich des Abgaskühlers 11, und insbesondere als integraler Bestandteil in diesen Bauteilen, angeordnet ist.

Für die nachfolgend beschriebenen Ausführungsformen der erfindungsgemäßen Ventileinrichtung 8 gilt, dass sich der Abgasstrang 5 im Bereich der Ventileinrichtung 8 in einen ersten Abgaskanal 12, einen zweiten Abgaskanal 13 sowie einen Abgasrückführkanal 14 aufteilt, wobei der Abgasrückführkanal 14 kommunizierend mit der Abgasrückführleitung 7 verbunden ist. Die Ventileinrichtung 8 ist dabei je nach Stellung zum zumindest teilweisen Verschließen des zweiten Abgaskanals 13 oder des Abgasrückführkanals 14 ausgebildet, wogegen der erste Abgaskanal 12 in keiner Stellung verschlossen wird, sodass stets ein zumindest geringer Abgasstrom über den ersten Abgaskanal 12 nach außen abgeführt wird.

In den Fig. 2 bis 4 ist eine erste mögliche Ausführungsform der erfindungsgemäßen Ventileinrichtung 8 dargestellt, die in diesem Fall einen verstellbaren Ventilkolben 15 aufweist, der zur Steuerung/Regelung der Abgasrückführrate in Axialrichtung verstellbar ist. Dieser Ventilkolben 15 kann bspw. aus Keramik ausgebildet sein und dadurch eine vergleichsweise glatte Oberfläche aufweisen, die ein Anhaften von unerwünschten Ablagerungen zumindest erschwert, vorzugsweise verhindert. Ein derartig glatter Ventilkolben 15 besitzt auch einen nicht zu unterschätzenden Reinigungseffekt, da er beim Hin- und Herverstellen an seiner Mantelfläche abgestreift wird. Generell ist der Ventilkolben 15 zwischen zumindest drei Stellungen (vgl. die Figuren 4a-c) verstellbar, nämlich einer gemäß der Fig. 4c gezeigten ersten Stellung, in der er den zweiten Abgaskanal 13 verschließt, wogegen der erste Abgaskanal 12 und der Abgasrückführkanal 14 vollständig geöffnet sind. In dieser Stellung erfolgt eine vergleichsweise hohe Abgasrückführrate, da der aus dem Abgasstrang 5 eintreffende Abgasmassenstrom nur auf den ersten Abgaskanal 12 und den Abgasrückführkanal 14 aufgeteilt wird. In einer zweiten Stellung, die gemäß der Fig. 4b dargestellt ist, öffnet der Ventilkolben 15 sowohl den ersten und zweiten Abgaskanal 12,13 als auch den Abgasrückführkanal 14, sodass auch in dieser Stellung eine Abgasrückführung erfolgt, die Abgasrückführrate jedoch unter der der ersten Stellung liegt. Gemäß der Fig. 4a schließlich ist eine dritte Stellung dargestellt, in der der Ventilkolben 15 den Abgasrückführkanal 14 verschließt, wogegen der erste und zweite Abgaskanal 12,13 vollständig geöffnet sind, sodass in diesem Fall keine Abgasrückführung erfolgt. Neben den gemäß den Figuren 4a bis 4c gezeigten Stellungen sind selbstverständlich auch Zwischenstellungen zur besonders feinen Steuerung/Regelung der Abgasrückführrate vorstellbar, sodass der Ventilkolben 15 bspw. lediglich teilweise in den Abgasrückführkanal 14 hineinragt und dadurch diesen nicht vollständig, sondern lediglich teilweise verschließt.

Die Fig. 4b zeigt dabei die zweite Stellung des Ventilkolbens 15, in welcher sich dieser bspw. ohne Bestromung eines entsprechenden Stellantriebs 16, bspw. eines Elektromotors, befindet. Der Ventilkolben 15 ist dabei über ein Lager 17 gelagert und wird mittels einer Kolbenstange 18 verstellt. Das Lager 17 ist dabei über eine entsprechende Dichtung 19 gegenüber dem abgasführenden Teil der Ventileinrichtung 8 abgedichtet.

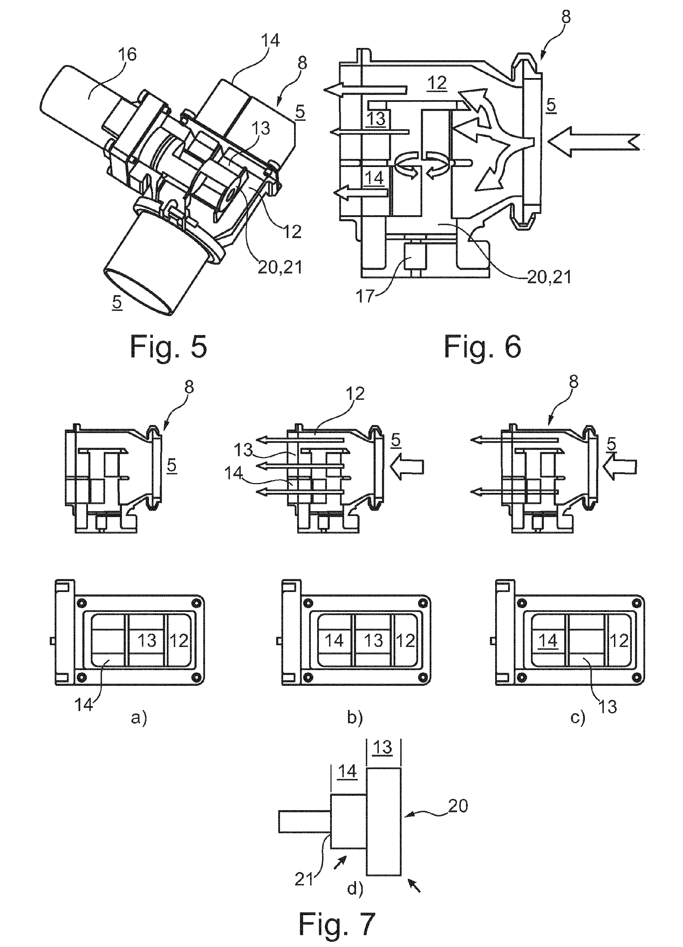

Betrachtet man die Ventileinrichtungen 8 gemäß den Fig. 5 bis 7, so kann man erkennen, dass die Ventileinrichtung 8 in den dort gezeigten Ausführungsformen ein drehbares Ventilelement 20 in der Art eines Ventilzylinders 21 aufweist, welches ebenfalls selbstverständlich aus Metall oder aus Keramik ausgebildet sein kann. Auch in diesem Fall besitzt die Ausbildung des Ventilelements 20 aus Keramik den großen Vorteil einer glatten Oberfläche und dadurch einer reduzierten Neigung für unerwünschte Anlagerungen. Wie in der Ventileinrichtung 8 gemäß den Fig. 2 bis 4, ist das Ventilelement 20 trotz der Beeinflussung eines Massenstroms im zweiten Abgaskanal 13 sowie im Abgasrückführkanal 14 ausgebildet.

Gemäß den Figuren 7a bis 7c sind dabei wiederum die drei Extremalstellungen der Ventileinrichtung 8 gezeigt, wobei in der gemäß der Fig. 7c gezeigten ersten Stellung das Ventilelement 20 den zweiten Abgaskanal 13 verschließt, wogegen der erste Abgaskanal 12 und der Abgasrückführkanal 14 vollständig geöffnet sind. In der gemäß der Fig. 7b gezeigten zweiten Stellung hingegen öffnet das Ventilelement 20 sämtliche Kanäle 12,13 und 14 jeweils vollständig. In der gemäß der Fig. 7a gezeigten dritten Stellung hingegen, verschließt das verdrehbare Ventilelement 20 den Abgasrückführkanal 14, wogegen der erste und der zweite Abgaskanal 12,13 vollständig geöffnet sind, sodass in diesem Fall keine Abgasrückführung erfolgt. Gemäß der Fig. 7b erfolgt eine im Vergleich zur Fig. 7c reduzierte Abgasrückführung, wogegen gemäß der Fig. 7c die maximal mögliche Abgasrückführung erfolgt. Wie bei den Ausführungen zu der Ventileinrichtung 8 gemäß den Fig. 2 bis 4, sind auch bei der Ventileinrichtung 8 gemäß den Fig. 5 bis 7 unterschiedlichste Zwischenstellungen des drehbaren Ventilelements 20 denkbar, sodass neben den gemäß den Fig. 7a bis 7c gezeigten Extremalstellungen auch beliebige Zwischenstellungen zur exakten Dosierung der Abgasrückführrate darstellbar sind.

Betrachtet man die Figuren 7a bis 7c, so kann man zudem erkennen, dass der erste Abgaskanal 12 einen größeren Querschnitt aufweist, als bspw. der zweite Abgaskanal 13 oder der Abgasrückführkanal 14. In dieser Weise kann selbstverständlich auch das Ventilelement 20 ausgebildet sein, wie dies bspw. gemäß der Fig. 7d dargestellt ist, sodass bspw. ein Durchmesser des als Ventilzylinders 21 ausgebildeten Ventilelements 20 im Bereich des zweiten Abgaskanals 13 deutlich größer ist als im Bereich des Abgasrückführkanals 14.

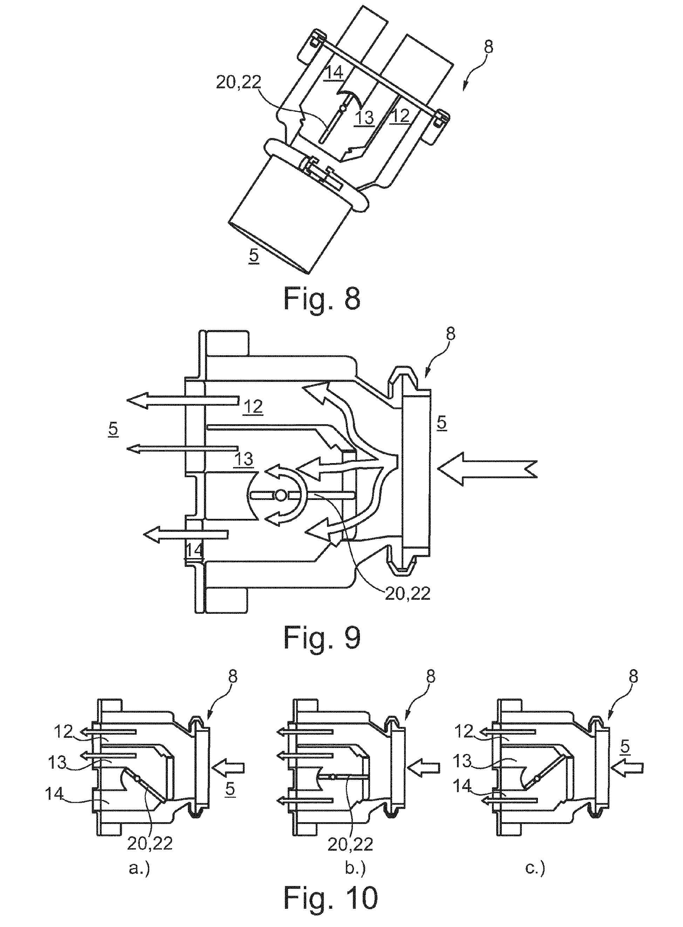

Gemäß den Figuren 8 bis 10 schließlich ist eine weitere alternative Ausführungsform der Ventileinrichtung 8 gezeigt, wobei in diesem Fall das Ventilelement 20 als Klappe 22 ausgebildet ist. In der gemäß der Fig. 10c dargestellten Extremalstellung, welche zugleich die erste Stellung darstellt, verschließt das Ventilelement 20, d. h. die Klappe 22 den zweiten Abgaskanal 13, wogegen der erste Abgaskanal 12 und der Abgasrückführkanal 14 geöffnet sind. In der gemäß der Fig. 10b dargestellten Stellung hingegen sind sämtliche Kanäle 12,13 und 14 geöffnet. In der gemäß der Fig. 10a dargestellten dritten Stellung verschließt das Ventilelement 20, d. h. die Klappe 22 den Abgasrückführkanal 14 vollständig, wogegen der erste und zweite Abgaskanal 12,13 geöffnet sind. In diesem Fall findet somit wiederum keine Abgasrückführung statt.

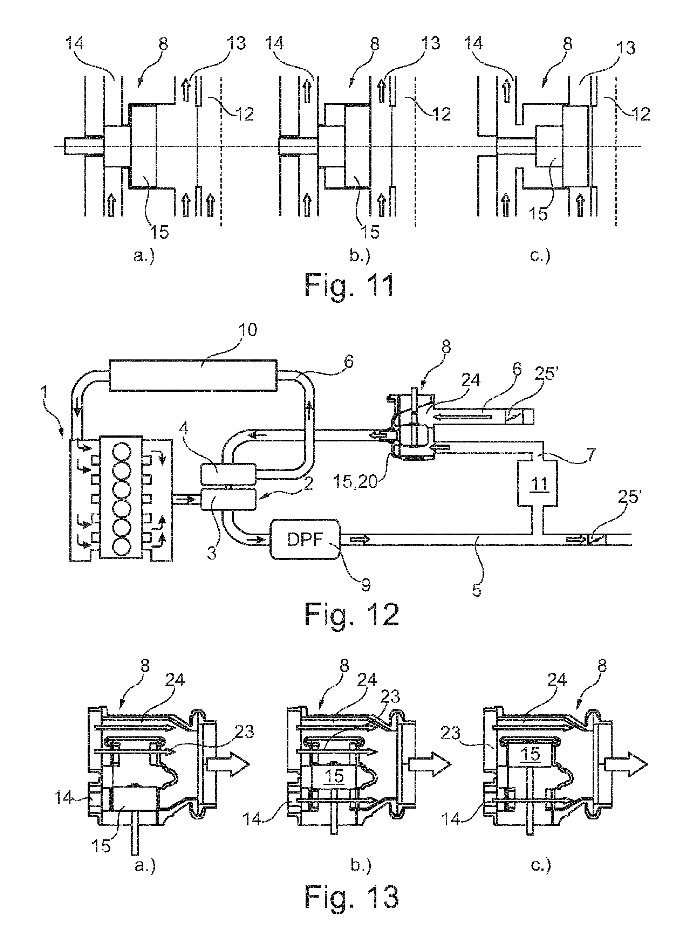

In den Fig. 11a bis 11c ist eine weitere mögliche Ausführungsform der Ventileinrichtung 8 dargestellt, die in diesem Fall einen verstellbaren Ventilkolben 15 mit unterschiedlichen Radien aufweist, der zur Steuerung/Regelung der Abgasrückführrate in Axialrichtung verstellbar ist. Dieser Ventilkolben 15 kann bspw. aus Keramik ausgebildet sein und dadurch eine vergleichsweise glatte Oberfläche aufweisen, die ein Anhaften von unerwünschten Ablagerungen zumindest erschwert, vorzugsweise verhindert. Generell ist der Ventilkolben 15 zwischen zumindest drei Stellungen (vgl. die Figuren 11a-c) verstellbar, nämlich einer gemäß der Fig. 11c gezeigten ersten Stellung, in der er den zweiten Abgaskanal 13 verschließt, wogegen der erste Abgaskanal 12 und der Abgasrückführkanal 14 vollständig geöffnet sind. In dieser Stellung erfolgt eine vergleichsweise hohe Abgasrückführrate, da der aus dem Abgasstrang 5 eintreffende Abgasmassenstrom nur auf den ersten Abgaskanal 12 und den Abgasrückführkanal 14 aufgeteilt wird. In einer zweiten Stellung, die gemäß der Fig. 11b dargestellt ist, öffnet der Ventilkolben 15 sowohl den ersten und zweiten Abgaskanal 12,13 als auch den Abgasrückführkanal 14, sodass auch in dieser Stellung eine Abgasrückführung erfolgt, die Abgasrückführrate jedoch unter der der ersten Stellung liegt. Gemäß der Fig. 11 a schließlich ist eine dritte Stellung dargestellt, in der der Ventilkolben 15 den Abgasrückführkanal 14 verschließt, wogegen der erste und zweite Abgaskanal 12,13 vollständig geöffnet sind, sodass in diesem Fall keine Abgasrückführung erfolgt. Neben den gemäß den Figuren 11a bis 11c gezeigten Stellungen sind selbstverständlich auch Zwischenstellungen zur besonders feinen Steuerung/Regelung der Abgasrückführrate vorstellbar, sodass der Ventilkolben 15 bspw. lediglich teilweise in den Abgasrückführkanal 14 hineinragt und dadurch diesen nicht vollständig, sondern lediglich teilweise verschließt.

Der erste Abgaskanal 12 ist dabei gemäß den Fig. 11a-c mit unterbrochener Linie gezeichnet, was bedeuten soll, dass dieser rein optional vorgesehen ist. In diesem Fall wären nur der zweite Abgaskanal 13 und der Abgasrückführkanal 14 vorhanden, die beide von dem Ventilkolben 15 komplett verschließbar wären. Der zweite Abgaskanal 13 weist einen deutlich größeren Querschnitt auf als der Abgasrückführkanal 14, so dass der Ventilkolben 15 in diesem Bereich einen deutlich größeren Durchmesser aufweist als im Bereich des Abgasrückführkanals. Die gezeigte Ventileinrichtung 8 kann selbstverständlich auch im Einmündungsbereich der Abgasrückführleitung 7 in den Ansaugstrang 6 angeordnet sein, wobei in diesem Fall dann in der ersten und zweiten Abgasleitung 12,13 kein Abgas, sondern Frischluft aus dem Ansaugstrang 6 strömen würde.

Eine derartige Anordnung der Ventileinrichtung 8 ist in Fig. 12 und Fig. 13 gezeigt. Gemäß den Fig. 13a bis 13c ist eine Ventileinrichtung 8 im Bereich der Einmündung der Abgasrückführleitung 7 in dem Ansaugstrang 6 dargestellt, die wiederum einen verstellbaren Ventilkolben 15 aufweist, der zur Steuerung/Regelung der Abgasrückführrate in Axialrichtung verstellbar ist. Generell ist der Ventilkolben 15 zwischen zumindest drei Stellungen (vgl. die Figuren 13a-c) verstellbar, nämlich einer gemäß der Fig. 13c gezeigten ersten Stellung, in der er einen zweiten Frischluftkanal 23 verschließt, wogegen der erste Frischluftkanal 24 und der Abgasrückführkanal 14 vollständig geöffnet sind. In dieser Stellung erfolgt eine vergleichsweise hohe Abgasrückführrate. In einer zweiten Stellung, die gemäß der Fig. 13b dargestellt ist, öffnet der Ventilkolben 15 sowohl den ersten und zweiten Frischluftkanal 24,23 als auch den Abgasrückführkanal 14, sodass auch in dieser Stellung eine Abgasrückführung erfolgt, die Abgasrückführrate jedoch unter der der ersten Stellung liegt. Gemäß der Fig. 13a schließlich ist eine dritte Stellung dargestellt, in der der Ventilkolben 15 den Abgasrückführkanal 14 verschließt, wogegen der erste und zweite Frischluftkanal 24,23 vollständig geöffnet sind, sodass in diesem Fall keine Abgasrückführung erfolgt. Neben den gezeigten Extremalstellungen sind selbstverständlich auch wieder Zwischenstellungen zur besonders feinen Steuerung/Regelung der Abgasrückführrate vorstellbar.

Bei der Anordnung der Ventileinrichtung 8 im Bereich der Einmündung der Abgasrückführleitung 7 in den Ansaugstrang 6 erhält diese eine neue Funktion, d.h. die Ventileinrichtung 8 steuert und regelt nicht nur den Abgasrückführmassenstrom, sondern auch den Ansaugdruck im Ansaugstrang 6. bei einem Vorsehen einer Drosselklappe 25,25' im Ansaugstrang 6 und/oder im Abgasstrang 5 kann zusätzlich Einfluss auf die rückführbare Abgasmenge genommen werden. Mit der erfindungsgemäßen Ventileinrichtung 8 kann auf derartige Drosselklappen aber generelle auch verzichtet werden.

Mit den unterschiedlichsten Ausführungsformen der erfindungsgemäßen Ventileinrichtung 8 ist eine besonders exakte Steuerung/Regelung der Abgasrückführrate im Niederdruckbereich, d. h. stromab der Turbine 3 des Abgasturboladers 2 möglich, was mit bisherigen im Abgasstrang 5 angeordneten Drosselklappen so nicht möglich war. Zugleich ist auch eine Temperatursteuerung möglich. Sämtliche der gezeigten Ausführungsformen der Ventileinrichtung 8 besitzen einen geringen Bauraumbedarf, was ebenfalls einen großen Vorteil darstellt. Insbesondere die Ventileinrichtungen 8 gemäß den Figuren 2 bis 7 erzeugen dabei zudem einen geringen Druckverlust, da bei geöffnetem zweiten Abgaskanal 13 bzw. geöffnetem Abgasrückführkanal 14 das jeweilige Ventilelement 20,21,22 bzw. der Ventilkolben 15 nicht in einen Strömungsquerschnitt hineinragt. Durch die Ausführung aus Keramik werden zudem unerwünschte Ablagerungen durch die extrem glatte Oberfläche reduziert.

## Patentansprüche

1. Aufgeladene Brennkraftmaschine (1) mit einem Abgasturbolader (2), der turbinenseitig in einen Abgasstrang (5) und verdichterseitig in einen Ansaugstrang (6) eingebunden ist, und wobei eine den Abgasstrang (5) und den Ansaugstrang (6) verbindende Abgasrückführleitung (7) vorgesehen ist, wobei die Abgasrückführleitung (7) stromab der Turbine (3) des Abgasturboladers (2) aus dem Abgasstrang (5) abzweigt und stromauf des Verdichters (4) in den Ansaugstrang (6) mündet, wobei im Bereich der Abgasrückführleitung (7) eine Ventileinrichtung (8) zur Steuerung/Regelung einer Abgasrückführrate angeordnet ist,
**dadurch gekennzeichnet, dass**
- die Ventileinrichtung (8) einen verstellbaren Ventilkolben (15) aufweist, der zur Steuerung/Regelung der Abgasrückführrate in Axialrichtung verstellbar ist,
- sich der Abgasstrang (5) im Bereich der Ventileinrichtung (8) in einen ersten Abgaskanal (12), einen zweiten Abgaskanal (13) sowie einen Abgasrückführkanal (14) aufteilt, wobei die Ventileinrichtung (8) zum Verschließen des zweiten Abgaskanals (13) oder des Abgasrückführkanals (14) ausgebildet ist,
- der Ventilkolben (15) zumindest zwischen drei Stellungen verstellbar ist, nämlich
- einer ersten Stellung, in welcher er den zweiten Abgaskanal (13) verschließt, wogegen der erste Abgaskanal (12) und der Abgasrückführkanal (14) vollständig geöffnet sind,
- einer zweiten Stellung, in welcher er den ersten und zweiten Abgaskanal (12,13) und den Abgasrückführkanal (14) vollständig öffnet,
- einer dritten Stellung, in welcher er den Abgasrückführkanal (14) schließt, wogegen der erste und zweite Abgaskanal (12,13) vollständig geöffnet sind.

2. Brennkraftmaschine nach Anspruch 1,
**dadurch gekennzeichnet, dass**
- zwischen der Turbine (3) des Abgasturboladers (2) und der Ventileinrichtung (8) ein Filter (9), insbesondere ein Dieselpartikelfilter angeordnet ist, und/oder
- dass zwischen dem Verdichter (4) und der Brennkraftmaschine (1) ein Ladeluftkühler (10) angeordnet ist, und/oder
- dass zwischen der Ventileinrichtung (8) und dem Abgasstrang (5) ein Abgaskühler (11) angeordnet ist.

3. Brennkraftmaschine nach Anspruch 2,
**dadurch gekennzeichnet, dass**
- dass die Ventileinrichtung (8) im Bereich der Abzweigung der Abgasrückführleitung (7) aus dem Abgasstrang (5) angeordnet ist, oder
- dass die Ventileinrichtung (8) im Bereich der Einmündung der Abgasrückführleitung (7) in den Ansaugstrang (6) angeordnet ist, oder
- dass die Ventileinrichtung (8) im Bereich des Filters (9), insbesondere in diesem angeordnet ist, oder
- dass die Ventileinrichtung (8) im Bereich des Ladeluftkühlers (10) angeordnet ist.

4. Brennkraftmaschine nach einem der Ansprüche 1 bis 3,
**dadurch gekennzeichnet, dass**
der Ventilkolben (15) aus Keramik ausgebildet ist.

## Claims

1. Supercharged internal combustion engine (1), comprising an exhaust gas turbocharger (2) which is integrated into an exhaust tract (5) on the turbine side and into an intake tract (6) on the compressor side, and an exhaust gas recirculation line (7) connecting the exhaust tract (5) and the intake tract (6) being provided, the exhaust gas recirculation line (7) branching off from the exhaust tract (5) downstream of the turbine (3) of the exhaust gas turbocharger (2) and opening into the intake tract (6) upstream of the compressor (4), a valve device (8) for open-loop control/closed-loop control of an exhaust gas recirculation rate being arranged in the region of the exhaust gas recirculation line (7), **characterised in that**
- the valve device (8) has a displaceable valve piston (15), which is displaceable in the axial direction for open-loop control/closed-loop control of the exhaust gas recirculation rate,
- in the region of the valve device (8), the exhaust tract (5) divides into a first exhaust gas duct (12), a second exhaust gas duct (13) and an exhaust gas recirculation duct (14), the valve device (8) being configured for closing the second exhaust gas duct (13) or the exhaust gas recirculation duct (14),
- the valve piston (15) is displaceable at least between three positions, namely
- a first position, in which said valve piston closes the second exhaust gas duct (13), whereas the first exhaust gas duct (12) and the exhaust gas recirculation duct (14) are completely open,
- a second position, in which said valve piston completely opens the first and second exhaust gas duct (12,13) and the exhaust gas recirculation duct (14),
- a third position, in which said valve piston closes the exhaust gas recirculation duct (14), whereas the first and second exhaust gas duct (12, 13) are completely open.

2. Internal combustion engine according to claim 1, **characterised in that**
- between the turbine (3) of the exhaust gas turbocharger (2) and the valve device (8), a filter (9), in particular a diesel particulate filter, is arranged, and/or
- **in that** between the compressor (4) and the internal combustion engine (1), a charge-air cooler (10) is arranged, and/or
- **in that** between the valve device (8) and the exhaust tract (5), an exhaust gas cooler (11) is arranged.

3. Internal combustion engine according to claim 2, **characterised in that**
- the valve device (8) is arranged in the region of the branching of the exhaust gas recirculation line (7) from the exhaust tract (5), or
- **in that** the valve device (8) is arranged in the region of the opening of the exhaust gas recirculation line (7) into the intake tract (6), or
- **in that** the valve device (8) is arranged in the region of the filter (9), in particular in said filter, or
- **in that** the valve device (8) is arranged in the region of the charge-air cooler (10).

4. Internal combustion engine according any of claims 1 to 3, **characterised in that** the valve piston (15) is made of ceramic.

## Revendications

1. Moteur à combustion interne suralimenté (1) avec un turbocompresseur à gaz d'échappement (2), qui est intégré côté turbine à une voie de gaz d'échappement (5) et côté compresseur à une voie d'aspiration (6) et dans lequel il est prévu une conduite de renvoi de gaz d'échappement (7) reliant la voie de gaz d'échappement (5) et la voie d'aspiration (6), dans lequel la conduite de renvoi de gaz d'échappement (7) dérive, en aval de la turbine (3) du turbocompresseur à gaz d'échappement (2), de la voie de gaz d'échappement (5) et débouche, en amont du compresseur (4), dans la voie d'aspiration (6), dans lequel on aménage dans la zone de la conduite de renvoi de gaz d'échappement (7) un dispositif à soupape (8) pour commander/réguler un débit de renvoi de gaz d'échappement,
**caractérisé en ce que** :
- le dispositif à soupape (8) présente un piston de soupape réglable (15), qui peut se déplacer dans la direction axiale pour commander/réguler le débit de renvoi de gaz d'échappement,
- la voie de gaz d'échappement (5) se divise, dans la zone du dispositif à soupape (8), en un premier canal de gaz d'échappement (12), un second canal de gaz d'échappement (13) ainsi qu'un canal de renvoi de gaz d'échappement (14), le dispositif à soupape (8) étant conçu pour fermer le second canal d'échappement (13) ou le canal de renvoi de gaz d'échappement (14),
- le piston de soupape (15) peut se déplacer au moins entre trois positions, à savoir :
- une première position, dans laquelle il ferme le second canal de gaz d'échappement (13), tandis que le premier canal de gaz d'échappement (12) et le canal de renvoi de gaz d'échappement (14) sont complètement ouverts,
- une deuxième position dans laquelle il ouvre complètement le premier et le second canal de gaz d'échappement (12, 13) et le canal de renvoi de gaz d'échappement (14), et
- une troisième position dans laquelle il ferme le canal de renvoi de gaz d'échappement (14), tandis que le premier et le second canal de gaz d'échappement (12, 13) sont complètement ouverts.

2. Moteur à combustion interne selon la revendication 1,
**caractérisé en ce que** :
- entre la turbine (3) du turbocompresseur à gaz d'échappement (2) et le dispositif à soupape (8) est aménagé un filtre (9), en particulier un filtre à particules Diesel et/ou
- entre le compresseur (4) et le moteur à combustion interne (1) est aménagé un refroidisseur d'air de suralimentation (10) et/ou
- entre le dispositif à soupape (8) et la voie de gaz d'échappement (5) est aménagé un refroidisseur de gaz d'échappement (11).

3. Moteur à combustion interne selon la revendication 2,
**caractérisé en ce que** :
- le dispositif à soupape (8) est aménagé dans la zone de la dérivation de la conduite de renvoi de gaz d'échappement (7) vis-à-vis de la voie de gaz d'échappement (5) ou
- le dispositif à soupape (8) est aménagé dans la zone de l'embouchure de la conduite de renvoi de gaz d'échappement (7) dans la voie d'aspiration (6) ou
- le dispositif à soupape (8) est aménagé dans la zone du filtre (9), en particulier dans celui-ci, ou
- le dispositif à soupape (8) est aménagé dans la zone du refroidisseur d'air de suralimentation (10).

4. Moteur à combustion interne selon l'une quelconque des revendications 1 à 3,
**caractérisé en ce que** :
le piston de soupape (15) est formé de céramique.
